# EUROPÄISCHE PATENTSCHRIFT

(11) **EP 0 742 380 B1**
(45) Veröffentlichungstag und Bekanntmachung des Hinweises auf die Patenterteilung: **08.08.2001**
(21) Anmeldenummer: 96106160.3
(22) Anmeldetag: 19.04.1996
(51) Int. Cl.: F16D 66/02

(54) **Mehrstufiger Verschleissgeber für Bremsbeläge**
Multistep wear indicator for brake pads
Indicateur d'usure à étages multiples pour garnitures de frein

(30) Priorität: 06.05.1995 DE 29507572 U
(43) Veröffentlichungstag der Anmeldung: 13.11.1996
(73) Patentinhaber: Mannesmann VDO AG, 60326 Frankfurt (DE)
(72) Erfinder: Werner, Thomas, Dipl.-Ing., 79848 Bonndorf (DE); Modest, Otmar, Ing., 78078 Niedereschach (DE)

(56) Entgegenhaltungen:
- EP-A- 0 637 697
- DE-C- 4 308 272
- DE-C- 4 312 354

## Beschreibung

Die Erfindung betrifft einen mehrstufigen Verschleißgeber für Bremsbeläge gemäß dem Oberbegriff des Anspruchs 1, wobei der Verschleißgeber in Bremsen von Fahrzeugen, Kränen, Seilbahnen und Hebezeugen Anwendung finden kann.

Ein Verschleißgeber nach dem Oberbegriff des Ansprüchs 1 ist aus DE 4 308 272 C bekannt.

An einen derartigen Geber, insbesondere aber an das eigentliche Sensorelement, das bei einer Kraftfahrzeugbremse in einem außerordentlich rauhen Milieu unmittelbar am oder im Bremsbelag verwendet wird und durch den Bremsvorgang Temperaturen bis zu 600°C ausgesetzt ist, müssen hohe Anforderungen hinsichtlich einer zweifelsfreien Funktion gestellt werden. Diese Anforderungen an die Funktionssicherheit müssen heute weniger deshalb so exakt definiert sein, weil rechtzeitig vor unzulässigen Betriebszuständen eines Bremsensystems gewarnt werden soll oder durch rechtzeitige Signalgabe eine vorbeugende Wartung ausgelöst werden soll, sondern weil bei modernen Bremsensystemen durch Steuerung des Reibmomentes eine Optimierung des Verschleißverhaltens der Bremsen und somit eine Minimierung der Wartungstätigkeit bewirkt und eine Erhöhung der Fahrsicherheit durch Vermeidung von Überhitzungen der Bremsen erzielt werden soll. Dabei ist eine stufenweise, d. h. quasianaloge Verschleißerfassung einer rein analogen Verschleißerfassung deshalb vorzuziehen, weil damit der Einfluß der Herstelltoleranzen der Wandlerelemente sowie der durch den Temperaturgang zusätzlich erfolgenden Meßwertabweichung eliminiert werden kann, d. h. es ist bei ausreichender Stufung in jedem Falle feststellbar, welcher Verschleißgrad erreicht ist.

Ein solcher Verschleißgeber ist andererseits selbst ein Verschleißteil, das beim Bremsbelagwechsel neu anzubringen ist oder im Bremsbelag bzw. in dem Verbundteil aus Bremsbelag und dessen Träger von vornherein integriert ist. Das heißt, der Verschleißgeber sollte problemlos montierbar sein, was im letzteren Falle zweifellos gegeben ist, er sollte aber auch kostengüntig herstellbar sein.

Die Aufgabe der vorliegenden Erfindung bestand somit darin, einen Verschleißgeber zu schaffen, welcher unter Großserienbedingungen gut reproduzierbar herstellbar ist, einen hohen Grad an Funktionssicherheit bietet und in seiner Geometrie mit vergleichsweise geringem Aufwand veränderbar oder neuen Einbaugegebenheiten anpaßbar ist.

Die Lösung der gestellten Aufgabe beschreibt der Patentanspruch 1. Bevorzugte Ausführungsvarianten stellen die Unteransprüche dar.

Der besondere Vorzug der Erfindung ist darin zu sehen, daß der Träger des sensierenden Widerstandsnetzwerkes als relativ dünnes Plättchen ausgebildet sein kann, welches formstabil und in hohem Maße temperaturbeständig ist. Ferner ist der Raumbedarf von Träger und Widerstandsnetzwerk durch Verwendung der Dickschichtschaltungstechnik extrem gering.

Der Aufbau des Verschleißgebers bewirkt außerdem, daß der keramische Träger während der Abnutzung des Bremsbelages nicht mit der Bremstrommel oder der Bremsscheibe in Berührung kommt und somit mögliche Beschädigungen erst gar nicht entstehen können.

Unter der Voraussetzung, daß die Signalsprünge konstant sein sollen, ist ein Widerstandsnetzwerk vorgesehen, bei welchem die Werte der Widerstände von Stufe zu Stufe ansteigen und welches aus einer Spannungsquelle mit Vorwiderstand betrieben wird. Dadurch ist, im Gegensatz zu einem Widerstandsnetzwerk mit jeweils gleichen Widerständen und einer Beschaltung mit einer Stromquelle der Gesamtwiderstand des Verschleißgebers bei großer Stufenzahl hoch und der Einfluß der Toleranzen relativ gering, so daß mit einem aus einer Spannungsquelle betriebenen Widerstandsnetzwerk mit steigenden Widerstandswerten eine höhere Stufenzahl für einen Verschleißgeber wählbar ist.

Vorteilhaft ist ferner, daß der Träger und der Leiterkörper im Nutzen herstellbar sind und daß mehrere Fertigungsschritte maschinell durchgeführt werden können und dadurch die geforderte Qualität garantiert ist. Bei der Komplettierung von Träger und Leiterkörper werden vorteilhafterweise die bedruckten Träger gegurtet und die Leiterkörper als Stanzstreifen einem Montageplatz zugeführt, wo das Verschweißen der vorzugsweise aus Kupfer hergestellten Leiterkörper mit den Trägern, das Freischneiden der Leiterkörper vom Stanzstreifen und das Biegen der Leiterkörper vorgenommen werden. Danach werden die von der Vorratsrolle abgenommenen und vorgefertigten Leitungen aufgeschweißt, beschnitten und abisoliert sowie eine Testmessung durchgeführt.

Die Kombination des Trägers mit dem Leiterkörper ist bei entsprechender Dimensionierung des Leiterkörpers insbesondere auch für die Handhabbarkeit des entstandenen Einlegeteils von Bedeutung, da auf diese Weise die Leiterschleifen eine ausreichend starre, selbsttragende Struktur darstellen. Erwähnenswert ist ferner, daß mit dem Einbetten der sensierenden Bauteile in einem geeigneten Duroplast auch die Außenkonturen des Verschleißgebers und dessen der Befestigung in einem Bremsbelag dienende Strukturen ausgeformt werden und somit ein zusätzliches Gehäuse und zusätzliche Befestigungsmittel nicht erforderlich sind. Dabei schließen die Außenkonturen auch den für den jeweiligen Anwendungsfall erforderlichen Ansatz für ein Umlenken und zweckmäßiges Herausführen der Leitungen ein.

Im folgenden sei die Erfindung anhand der beigefügten Zeichnungen näher erläutert. Es zeigen:
Fig. 1 ein Einbaubeispiel des Verschleißgebers in der Bremsbacke einer Trommelbremse,
Fig. 2 ein Einbaubeispiel des Verschleißgebers in der Bremsbacke einer Scheibenbremse,
Fig. 3 eine Teilansicht in Pfeilrichtung P in Figur 2,
Fig. 4 eine Frontansicht des Verschleißgebers gemäß Fig. 2 in Verschleißrichtung,
Fig. 5 eine Seitenansicht des Verschleißgebers gemäß Fig. 2,
Fig. 6 eine perspektivische Darstellung des in dem Kunststoffkörper des Verschleißgebers eingebetteten Verschleißsensors,
Fig. 7 eine Ansicht des Trägers und des aufgedruckten Widerstandsnetzwerkes.

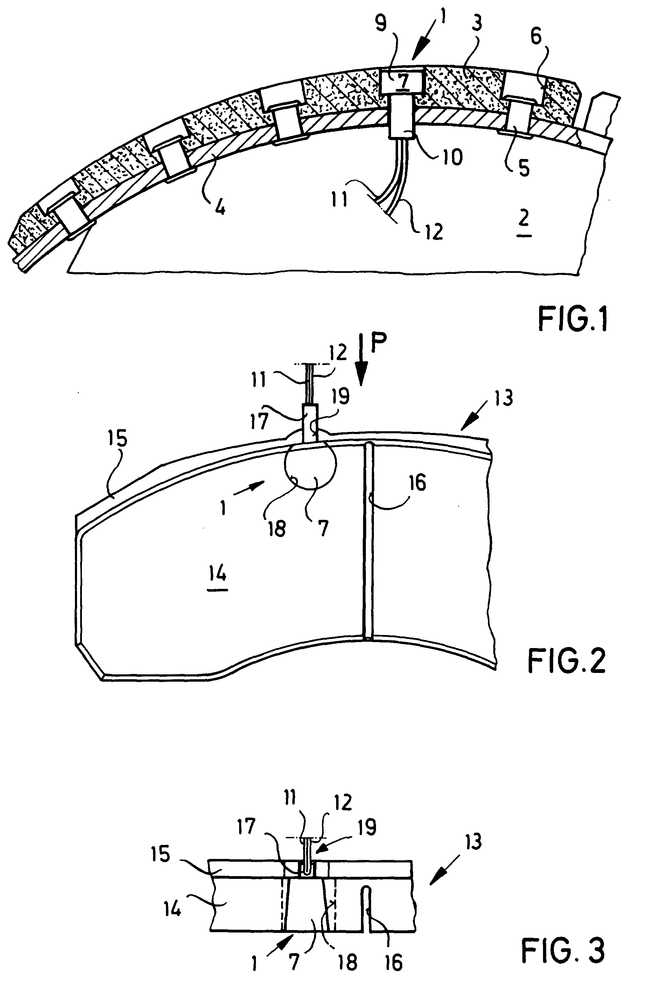

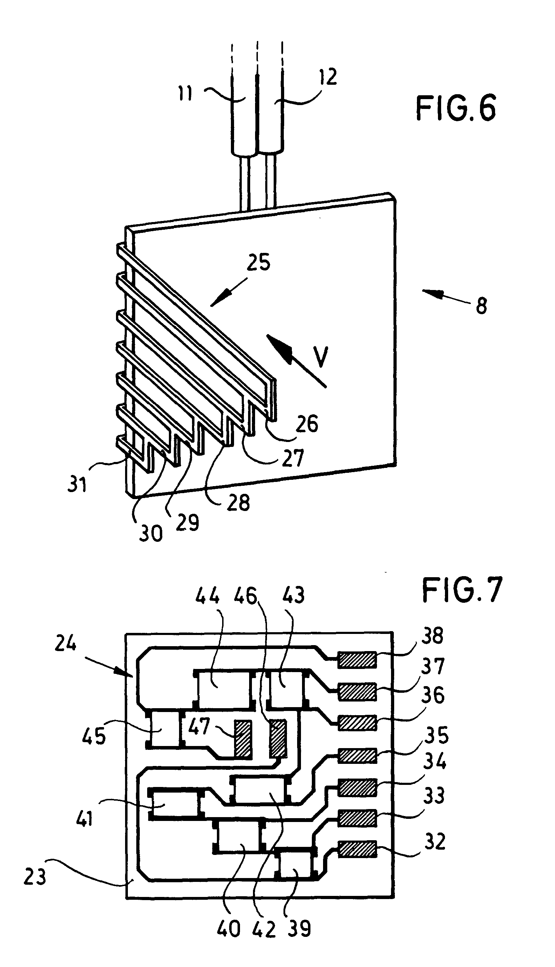

Das mit der Figur 1 dargestellte Einbaubeispiel des erfindungsgemäßen Verschleißgebers 1 zeigt eine teilweise geschnittene Bremsbacke 2 einer Tromelbremse mit innenliegenden Bremsbacken. Mit 3 ist einer von wenigstens zwei auf einer Schulter 4 der Bremsbacke 2 befestigten Bremsbelägen bezeichnet. Die Befestigung der Bremsbeläge erfolgt üblicherweise mittels mehrerer Niete, von denen eine mit 5 bezeichnet ist und denen im Bremsbelag 3 jeweils eine zylindrische Senkung 6 zugeordnet ist. Der Verschleißgeber 1 das heißt, ein das Gehäuse des Verschleißgebers 1 bildender Kunststoffkörper 7, in welchem der eigentliche Verschleißsensor 8 (Fig. 7) eigebettet ist, ist derart gestaltet, daß er mit einem Kopfteil 9 einerseits in die Senkung 6 paßt, andererseits einen Ansatz 10 aufweist, der dem Durchmesser des Nietschaftes entspricht, so daß sich der Verschleißgeber 1 in eine für einen Befestigungsniet 5 des Bremsbelages 3 einer Trommelbremse vorgesehene Durchgangsbohrung einpressen läßt. Mit 11 und 12 sind durch den Ansatz 10 gefaßte, hitzebeständig isolierte Leitungen bezeichnet, von denen eine eine Signalleitung, die andere eine Masseverbindung darstellt.

Die Figur 2 zeigt ein Einbaubeispiel des Verschleißgebers 1 in einer Bremsbacke 13 einer Scheibenbremse, wobei mit 14 der Bremsbelag und mit 15 der Träger des Bremsbelages bezeichnet sind. Mit 16 ist eine im Bremsbelag 14 vorgesehene Nut zur Vermeidung eines Staus von abgeriebenen Bremsbelagmaterial bezeichnet. Der bei dem Einbaubeispiel gemäß Figur 2 verwendete Verschleißgeber 1 ist gegenüber dem bereits beschriebenen bezüglich seiner äußeren Konturen geringfügig variiert, das heißt, mit einem Ansatz 17 versehen, welcher mit einem im wesentlichen quadratischen Querschnitt quer zur Achse des Verschleißgebers 1 ausgebildet ist. Den Konturen des Verschleißgebers 1 entsprechend sind bei dem Einbaubeispiel gemäß Figur 2 im Bremsbelag 14 eine zylindrische Bohrung 18 und im Träger 15 ein Schlitz 19 ausgebildet.

Aus der Figur 3 ist außerdem ersichtlich, daß beim Einbaubeispiel gemäß Figur 2 die Länge des Verschleißgebers 1 der gesamten Tiefe des Bremsbelages 14 entspricht, der Träger 15 somit dem Verschleißgeber 1 bei dessen Einpressen in den Bremsbelag 14 als Anschlag dient.

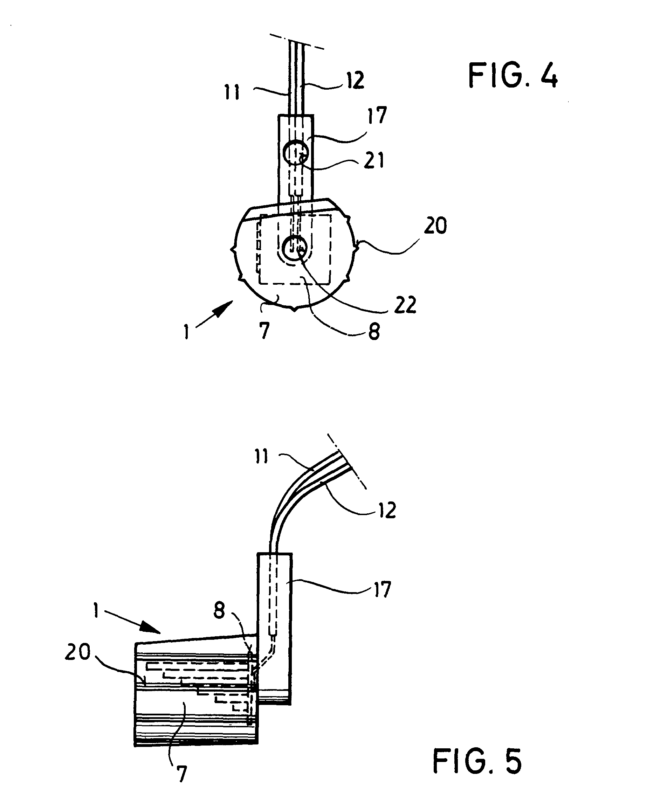

Wie aus den Figuren 4 und 5 ersichtlich ist, ist am Umfang des Verschleißsensors 1 bzw. an dessen zylindrischer Fläche eine Kerbverzahnung ausgebildet. Einer der Kerbzähne, die in Einsteckrichtung des Verschleißsensors 1 abgeflacht geformt sind, ist mit 20 bezeichnet. Zwei Öffnungen 21 und 22 sind gießtechnisch bedingt, und zwar ergibt sich die eine Öffnung 21 durch einen Stempel zum Fixieren der Leitungen 11 und 12, während die andere Öffnung 22 durch einen Stempel zum Fixieren des eigentlichen Verschleißsensors 8 entstanden ist.

In der Figur 6 ist der Verschleißsensor 8 so dargestellt, daß der Pfeil V die Verschleißrichtung anzeigt. Der Verschleißsensor 8 besteht aus einem relativ dünnen als Träger 23 bezeichneten Keramikplättchen, auf dessen in Figur 6 nicht sichtbarer Rückseite ein Widerstandsnetzwerk 24 (Fig. 7) siebdrucktechnisch aufgebracht ist. Mit 25 ist ein Leiterkörper bezeichnet, der als Stanzteil aus Kupferblech hergestellt ist. Der Leiterkörper 25 besteht aus mehreren, miteinander verbundenen und in Verschleißrichtung V gestaffelt ausgebildeten Leiterschleifen 26 bis 31, die bei der Abnützung des zu sensierenden Bremsbelages 14 nacheinander durchgetrennt werden. Die einzelnen als Reihenschaltung angeordneten und durch die Leiterschleifen 26 bis 31 kurzgeschlossenen Widerstände des Widerstandsnetzwerkes 24 werden auf diese Weise nach und nach dem Signalstromkreis zugeschaltet. Die Figur 6 zeigt, außerdem, daß der Leiterkörper 25 bzw. die jeweiligen Enden der Leiterschleifen 26 bis 31, die mit dem Widerstandsnetzwerk 24 kontaktiert sind, um eine Stirnseite des Trägers 23 herumgeführt und rechtwinklig abgebogen sind, so daß die Leiterschleifen 26 bis 31 im eingebetteten Zustand des Verschleißsensors 8 in die Verschleißrichtung weisen, während der Träger 23 sich in einer Parallellage zur Bremsfläche befindet.

Wie aus der Figur 7 hervorgeht sind auf der Seite des Trägers 23, auf welcher das Widerstandsnetzwerk 24 aufgebracht ist, Kontaktflächen 32 bis 38 angebracht, mit denen die Enden der Leiterschleifen 26 bis 31 verschweißt werden. Die über die Leiterschleifen 26 bis 31 kurzgeschlossenen, in Reihe geschalteten Widerstände sind mit 39, 40, 41, 42, 43 und 44 bezeichnet. Ein Widerstand 45, der nicht kurzgeschlossen ist ermöglicht es die Schaltung über die Leitungen 11 und 12 zu prüfen. Der Kontaktierung der Leitungen 11 und 12 mit dem Widerstandsnetzwerk 24 dienen Kontaktflächen 46 und 47. Als Dimensionierungsbeispiel sei erwähnt, daß bei dem eingangs angedeuteten System mit einer Spannungsquelle von 5 V und einem Vorwiderstand von 1,5 kΩ die Widerstandswerte der Widerstände 39 bis 45 286, 400, 600, 1000, 2800, 6000 und 214 Ω betragen können. Diese Widerstandswerte ermöglichen ein Drucken der Widerstände 39 bis 45 mit ein und derselben Widerstandspaste, so daß alle Widerstände das gleiche Temperaturverhalten zeigen. Andererseits kann es zweckmäßig sein, mehrere Widerstandspasten mit gegenläufigem Temperaturverhalten zu verwenden.

Der Vollständigkeit halber sein noch erwähnt daß als Duroplast zum Einbetten des Verschleißsensors 8 zweckmäßigerweise das für das Verbacken von Bremsbelägen verwendete Matrixmaterial vorgesehen wird. Wegen der Empfindlichkeit der Leiterschleifen auf Verbiegen und Abscheren muß ein drucklos erfolgendes Einbetten des Verschleißsensors 8 in einem Duroplast vorgenommen werden, das heißt ein bei Thermoplasten übliches Spritzgießen ist bei der Herstellung des Verschleißgebers 1 nicht angebracht.

## Patentansprüche

1. Mehrstufiger Verschleißgeber für Bremsbeläge mit einem sensierenden Widerstandsnetzwerk (24), welches auf einem plattenförmigen Träger (23) aufgebracht ist und mit dem Widerstandsnetzwerk (24) zugeordneten Leiterschleifen (26-31), wobei im im Bremsbelag (14) eingebauten Zustand des Verschleißgebers (1) das Widerstandsnetzwerk (24) im wesentlichen rechtwinklig zur Verschleißrichtung (V) und die in Verschleißrichtung nacheinander unterbrechbaren Leiterschleifen (26-31) in Verschleißrichtung (V) angeordnet sind,
**dadurch gekennzeichnet,**
dass der Träger (23) als Keramikplatte ausgebildet ist, auf welcher das Widerstandsnetzwerk (24) in Dickschichttechnik aufgebracht ist,
dass ein die Leiterschleifen (26-31) bildender, als Stanzteil hergestellter Leiterkörper (25) vorgesehen ist,
dass der Leiterkörper (25) derart abgewinkelt ausgebildet und mit dem Widerstandsnetzwerk (24) kontaktiert ist, dass die Leiterschleifen (26-31) zur Plattenebene des Trägers (23) im wesentlichen rechtwinklig ausgerichtet sind und
dass das Verbundteil aus Träger (23) und Leiterkörper (25) in einen in den Bremsbelag (14) einsetzbaren, das Gehäuse des Verschleißgebers (1) bildenden Kunststoffkörper (7) eingebettet ist.

2. Mehrstufiger Verschleißgeber nach Anspruch 1,
**dadurch gekennzeichnet**,
daß der Kunststoffkörper (7) als zylindrischer Körper ausgebildet ist und
daß an der Mantelfläche des Kunststoffkörpers (7) eine Kerbverzahnung (20) in axialer Richtung angeformt ist.

3. Mehrstufiger Verschleißgeber nach Anspruch 1,
**dadurch gekennzeichnet,**
daß der Träger (23) in dem Kunststoffkörper (7) derart eingebettet ist, daß das Widerstandsnetzwerk (24) sich auf der der Verschleißseite abgewandten Seite befindet und
daß der Leiterkörper (25) abgewinkelt und derart mit dem Träger (23) verbunden ist, daß er eine Stirnseite des Trägers (23) umgreift.

## Claims

1. Multistage wear sensor for brake linings having a sensing resistance network (24) which is applied to a plate-shaped carrier (23) and having conductors (26-31) assigned to the resistance network (24), in which, in the state of the wear sensor (1) in which it is installed in the brake lining (14), the resistance network (24) is arranged essentially at right angles to the direction (V) of wear and the conductor loops (26-31) which can be successively interrupted in the direction of wear are arranged in the direction (V) of wear, characterized in that the carrier (23) is embodied as a ceramic plate on which the resistance network (24) is applied using thick film technology, in that a conductor element (25) which forms the conductor loops (26-31) and is manufactured as a punched part is provided, in that the conductor element (25) is embodied bent and is in contact with the resistance network (24) in such a way that the conductor loops (26-31) are oriented essentially at right angles to the plane for the plate of the carrier (23), and in that the composite part composed of the carrier (23) and conductor element (25) is embedded into a plastic element (7) which can be inserted into the brake lining (14) and forms the housing of the wear sensor (1).

2. Multistage wear sensor according to Claim 1, characterized in that the plastic element (7) is embodied as a cylindrical element, and in that notched toothing (20) is formed in the axial direction on the outer face of the plastic element (7).

3. Multistage wear sensor according to Claim 1, characterized in that the carrier (23) is embedded in the plastic element (7) in such a way that the resistance network (24) is located on the side facing away from the wear side, and in that the conductor element (25) is bent and connected to the carrier (23) in such a way that it engages around an end side of the carrier (23).

## Revendications

1. Détecteur d'usure à plusieurs échelons pour des garnitures de frein avec un réseau de résistances d'exploration (24) qui est appliqué sur un support en forme de plaquette (23), et avec des boucles conductrices (26-31) associées audit réseau de résistances (24), ledit réseau de résistances (24) étant, pour l'essentiel, disposé, en l'état incorporé du détecteur d'usure (1) dans la garniture de frein (14), perpendiculairement au sens de l'usure (V) et lesdites boucles conductrices (26-31), pouvant être successivement interrompues dans le sens de l'usure, étant disposées dans le sens de l'usure (V),
caractérisé par le fait
que le support (23) revêt la configuration d'une plaquette céramique sur laquelle est appliqué le réseau de résistances (24) en technique de circuit à couche épaisse,
qu'il est prévu un élément de câblage (25) fabriqué comme pièce d'estampage et formant les boucles conductrices (26-31),
que ledit élément de câblage (25) est réalisé coudé et mis en contact avec le réseau de résistances (24) de telle sorte que lesdites boucles conductrices (26-31) soient disposées, pour l'essentiel, perpendiculairement au plan de la plaquette du support (23) et
que l'élément composé constitué du support (23) et de l'élément de câblage (25) est enrobé dans un corps en résine synthétique (7) pouvant être incorporé dans la garniture de frein (14) et constituant le boîtier du détecteur d'usure (1) .

2. Détecteur d'usure à plusieurs échelons selon la revendication 1,
caractérisé par le fait
que le corps en résine synthétique (7) est réalisé sous une forme cylindrique et que sur la surface latérale dudit corps en résine synthétique (7) est moulée une denture à cannelures (20) dans le sens axial.

3. Détecteur d'usure à plusieurs échelons selon la revendication 1,
caractérisé par le fait
que le support (23) est enrobé dans le corps en résine synthétique (7) de telle sorte que le réseau de résistances (24) se trouve sur la face opposée à la face d'usure et
que l'élément de câblage (25) est coudé et relié au support (23) de telle sorte qu'il entoure une face frontale dudit support (23).
